# EUROPEAN PATENT APPLICATION

(11) **EP 3 989 410 A1**
(43) Date of publication of application: **27.04.2022**
(21) Application number: 20203531.7
(22) Date of filing: 23.10.2020
(51) Int. Cl.: H02K 5/04, H02K 5/06, H02K 5/15, H02K 5/16, H02K 5/167, H02K 5/173

(54) **ELECTRIC ACTUATING MOTOR FOR A SERVO STEERING DEVICE**

(71) Applicant: Mahle International GmbH, 70376 Stuttgart (DE)
(72) Inventor: JERIC, Mitja, 6223 Komen (SI); RUTAR, Erik, 5251 Grgar (SI)
(74) Representative: BRP Renaud & Partner mbB Rechtsanwälte Patentanwälte Steuerberater

(57) **Abstract**

The present invention relates to an electric actuating motor (1) for a servo steering device (2) which has a housing (3) with a housing pot (6) and with a cover (7) which closes off the housing pot (6) in a closed position (8). Simple production of the electric actuating motor (1) and simplified closure of the housing pot (6) with the cover (7) are achieved by virtue of the housing pot (6) having at least one protruding projection (17) and the cover (7) having at least one associated projection opening (21) in which the projection (17) is received in a closed position (8), wherein, in the closed position (8), furthermore, at least one pot connecting means (29) of the housing pot (6) forms a detent connection (31) with an associated cover connecting means (30) of the cover (7).

The invention furthermore relates to a servo steering device (2) having an electric actuating motor (1) of said type, and to a method for producing a servo steering device (2) of said type.

## Description

The present invention relates to an electric actuating motor for a servo steering device, which electric actuating motor has a housing through which a shaft is guided axially. The invention furthermore relates to a servo steering device of said type and to a method for producing a servo steering device of said type.

In a servo steering device, also referred to as servo steering system, steering movements of a steering device, for example of a steering wheel, are assisted, in particular boosted, by an electric actuating motor, and transmitted to a steering gear in order to move at least one wheel of an associated vehicle and thus steer the vehicle. In the case of at least partially autonomous motor vehicles, the electric actuating motor can furthermore drive the steering gear, and thus steer the motor vehicle, independently of the movement of the steering device. In the case of such a servo steering device, also referred to as Electric Power Steering or EPS for short, the electric actuating motor has a housing which has a housing pot and a cover and through which a shaft is guided.

An electric actuating motor of said type is known for example from EP 1 560 314 A1. To assist the steering, the electric actuating motor commonly has a stator which is arranged in the housing and which interacts with the shaft. The cover is, in a closed position, attached to the housing pot and closes the housing pot, wherein the cover and the housing pot are screwed together in the closed position.

EP 3 402 055 A1 presents a further electric actuating motor having a housing pot and having a cover which closes off the housing pot in a closed position. Here, the housing pot has a radial pot base and a pot wall protruding axially from the pot base and running in a circumferential direction, from which pot wall a shoulder protrudes radially on the outer side. The cover has a cover base which is situated opposite the pot base in the closed position. The shoulder has multiple shoulder openings by means of which the housing pot is fastened to the cover by means of screws. Furthermore, on the housing cover, additional openings are provided which serve for the screw connection of the electric actuating motor in the servo steering system.

Such electric actuating motors are commonly prefabricated, that is to say in particular brought into the closed position, and subsequently installed in an associated servo steering device. In the installed installation position, the electric actuating motor is in this case commonly fastened at the cover side in the servo steering device, in particular screwed to an associated flange.

This has the effect that the production of the electric actuating motor and the installation of the electric actuating motor and of the servo steering device are cumbersome. Furthermore, the installation of the electric actuating motor in the servo steering device requires increased stability and strength of the cover, which are associated with increased production costs and/or an increased weight of the electric actuating motor.

The present invention is therefore concerned with the problem of specifying, for an electric actuating motor of the type mentioned in the introduction, for a servo steering device having an electric actuating motor of said type and for a method for producing a servo steering device of said type, improved or at least different embodiments which are distinguished in particular by a simple and inexpensive implementation and a weight-reduced design.

Said object is achieved according to the invention by means of the subjects of the independent claims. The dependent claims relate to advantageous embodiments.

The present invention is based on the general concept, in the case of an electric actuating motor for a servo steering device, which electric actuating motor has a housing with a housing pot and with a cover which closes off the housing pot, of attaching the cover, with connecting means integrated in the housing, by means of a detent connection to the housing pot and of thus closing the housing pot. It is thus preferably the case that, for closing of the housing pot by means of the housing cover, the use of screws, such as are conventional in the prior art, is dispensed with. This leads to a simple and stable connection of the cover to the housing pot. Furthermore, in this way, the number of separate constituent parts of the electric actuating motor is reduced, such that the electric actuating motor is in turn easier to produce and implement. The omission of screws, such as are conventionally provided, furthermore makes it possible for the electric actuating motor to be produced in a more compact and/or weight-reduced form. Owing to the forces acting to a reduced degree on the cover in the position attached to the housing pot in the electric actuating motor, hereinafter also referred to as closed position, it is furthermore possible for the cover to be formed with thinner walls. This in turn leads to simple and inexpensive production of the electric actuating motor.

In accordance with the concept of the invention, the electric actuating motor has the housing in which a stator is accommodated and through which at least one shaft is axially guided. The housing has the housing pot and the cover which is separate from the housing pot and which closes off the housing pot in the closed position. The housing pot has a radial pot base running in a circumferential direction and has a pot wall protruding axially from the pot base and running in the circumferential direction. The housing pot furthermore has, on that side of the pot wall which is averted from the pot base, a radially outwardly protruding shoulder running in the circumferential direction, which shoulder has at least one shoulder opening. The cover has a cover base which is situated opposite the pot base in the closed position. Furthermore, the cover has, for the at least one shoulder opening, in each case one associated cover opening which, with the associated shoulder opening, forms an axial passage. The axial passage serves preferably for the installation of the electric actuating motor in an associated servo steering device. According to the invention, the shoulder has at least one projection which protrudes axially on the side averted from the pot base, which projection is received in the closed position in an associated opening of the cover, hereinafter also referred to as projection opening. Furthermore, the housing pot has at least one connecting means, hereinafter also referred to as pot connecting means, in the pot wall, and the cover has an associated connecting means, hereinafter also referred to as cover connecting means, for the respective pot connecting means. Here, the cover connecting means protrudes axially from the cover base and, in the closed position, is arranged in the housing pot. According to the invention, the respective pot connecting means forms a detent connection with the associated cover connecting means in the closed position. In particular, the detent connection is produced by virtue of the cover being arranged relative to the housing pot such that the at least one cover connecting means engages into the housing pot.

The electric actuating motor may also have further constituent parts aside from the stator and the shaft. In particular, the electric actuating motor may have a sensor means by which a rotational position of the shaft can be determined.

The shaft expediently interacts with the stator. For this purpose, the shaft may be connected rotationally conjointly to a rotor, associated with the stator, of the electric actuating motor or may correspond to the rotor.

The cover is expediently attached to the housing pot only by means of the at least one detent connection in the closed position. This means in particular that the connection between the housing pot and the cover in the closed position of the electric actuating motor, in particular prior to the installation of the electric actuating motor in an associated servo steering device, has no screws.

The shaft is expediently guided axially through the cover and projects out of the cover in an axially outward direction. For this purpose, the cover expediently has a shaft opening.

Here, by means of the interaction of the at least one projection with the associated projection opening of the cover, the at least one cover connecting means and the respectively associated housing connecting means are aligned relative to one another. A separate alignment of the at least one cover connecting means with the associated housing connecting means is therefore not necessary. The interaction of the projection with the associated projection opening furthermore aligns the at least one shoulder opening and the associated cover opening with one another such that the associated axial passage is formed. This leads to considerable simplification during the production of the electric actuating motor.

For the installation of the electric actuating motor in the associated servo steering device, the electric actuating motor is prefabricated, and provided, in the closed position. Here, for the installation, a screw is preferably led through the respective passage, which screw therefore screws the electric actuating motor in the servo steering device, in particular to a flange. For this purpose, the flange preferably has, for the respective passage or for the respective screw, a flange opening which, with the passage of the electric actuating motor, can form an axial screw passage. When the at least one screw has been screwed tight, the electric actuating motor and the servo steering device, in particular the flange, are in an installed position. Here, in the installed position, the flange is acted on axially in the direction of the cover, which in turn is acted on axially in the direction of the housing pot, in particular of the shoulder.

In preferred embodiments, at least one of the connecting means, preferably at least one of the cover connecting means, is a detent lug which has an axially running and protruding and radially elastic limb and which has a lug protruding radially from the limb. The associated connecting means, preferably the associated pot connecting means, is a cutout in which the lug engages radially so as to form the detent connection. To form the detent connection, therefore, the cover is arranged on the housing pot, and the at least one cover connecting means, in particular the detent lug, is pushed into the pot, preferably axially. This results in an elastic deformation of the limb, which recovers its shape when the lug overlaps the associated recess, such that the lug engages with detent action into the cutout and thus forms the detent connection.

Preferably, at least one of the housing connecting means, preferably the respective housing connecting means, is a cutout that is formed in the pot wall. At least one of the at least one cutouts, preferably the respective cutout, is advantageously a radial aperture. This simplifies the production of the electric actuating motor. Furthermore, it is thus possible, as required, for the respective detent connection to be released in a simplified manner, and for the cover to thus be separated from the housing pot.

Preferred embodiments provide for at least one of the at least one projections to be formed as a neck which surrounds an associated one of the at least one shoulder openings. The neck particularly preferably delimits the associated shoulder opening. In this way, the alignment of the respective shoulder opening with the associated cover opening can be realized in a simplified and more precise manner, that is to say the associated axial passage can be realized in a more precise and simple manner.

It is particularly preferable here if at least one of the necks radially and peripherally delimits, in particular surrounds, the associated shoulder opening. This means in particular that the opening may be formed in the neck. This leads to simplified production of the housing pot and to a more precise relative arrangement of the cover with respect to the respective shoulder opening, and thus more precise formation of the respective axial passage.

Embodiments are advantageous in which at least one of the at least one projection openings corresponds to a cover opening which, with the associated shoulder opening, forms the passage. This is the case in particular if the associated projection is formed as a neck. Thus, the respective shoulder opening, with the neck, serves to form the axial passage and furthermore to receive the projection, in particular the neck. This leads to a considerably simplified design of the housing. Furthermore, this leads to an improved relative arrangement between the cover and the housing pot and thus also between the connecting means with respect to one another.

Embodiments are preferable in which an elevation protrudes axially from a surface of the cover which is averted from the pot base in the closed position, hereinafter also referred to as upper surface. The elevation is advantageously dimensioned such that it lies in a common flat plane with an axial end surface of at least one of the projections, in particular of an associated projection, or projects axially beyond the end surface. This has the effect that, in the installed position, the flange firstly acts on the elevation and thus leads to a deformation, in particular a plastic deformation, of the elevation. The strength of the cover is thus increased, and/or the cover is fixed in a more stable manner relative to the flange and relative to the housing pot. Altogether, therefore, increased stability of the electric actuating motor in the installed position, and reliable fixing of the cover to the housing pot and to the flange, are realized.

Here, embodiments are advantageous in which at least one of the at least one elevations is formed as a collar which surrounds, in particular delimits, an associated one of the at least one projection openings, which advantageously corresponds to the cover opening. The collar thus in particular surrounds, in the manner of a neck, the associated projection opening, in particular cover opening. Accordingly, in one possible embodiment, the shoulder opening is delimited by the neck, whereas the projection opening corresponding to the associated cover opening is delimited by the collar. In the closed position, the neck is thus received in the collar.

In principle, the electric actuating motor may have only a single projection in the shoulder.

The shoulder preferably has at least two projections, which are spaced apart from one another in a circumferential direction. A simplified attachment of the cover to the housing pot and/or a fixing of a relative position of the cover with respect to the housing pot are thus realized. Furthermore, in this way, a simplified and more precise orientation of the associated connecting means and of the associated openings with respect to one another can be realized. In particular, the shoulder may have exclusively two such projections, which are in particular arranged radially oppositely.

It is advantageous if the housing pot has at least two pot connecting means which are spaced apart from one another in the circumferential direction. Analogously to this, the cover has at least two cover connecting means which are spaced apart from one another in the circumferential direction. This has the effect that, in the closed position, at least two detent connections are formed which are spaced apart from one another in the circumferential direction. This leads to a more homogeneous and more uniform connection between the housing pot and the cover. For example, the electric actuating motor may have, in the closed position, four detent connections which are spaced apart from one another, in particular uniformly and equidistantly, in the circumferential direction.

The housing pot and the cover may in principle be produced from any materials and substances. Embodiments are advantageous in which the cover is produced from plastic, that is to say the cover is a plastics component. The cover can thus be produced in an inexpensive and simplified thin-walled and weight-reduced form.

Preferably, the at least one cover connecting means is formed and/or moulded integrally on the cover. This means in particular that the at least one cover connecting means is produced jointly with the cover, in particular jointly with the cover base, preferably from plastic. The cover may in particular be an injection-moulded component.

It is advantageous if the housing pot is produced from a metal or a metal alloy, that is to say the housing pot is a metal component.

It is self-evident that this invention encompasses not only the electric actuating motor but also a servo steering device with an electric actuating motor of said type and with the flange. Here, the shaft of the electric actuating motor is preferably connected in terms of drive to a steering gear of the servo steering device, in such a way that the electric actuating motor transmits a force, in particular a torque, to the steering gear for the purposes of steering an associated motor vehicle.

It is furthermore self-evident that this invention also encompasses the method for producing a servo steering device of said type, wherein, for this purpose, firstly the electric actuating motor is provided in the closed position, and the electric actuating motor is subsequently, in the closed position, installed into the servo steering device. Here, for the installation, a screw is inserted through the respective screw passage and screwed tight, wherein this is performed such that, in the installed position, the flange acts on the cover axially in the direction of the housing pot, in particular deforms the at least one elevation. For this purpose, the screw may lie with a screw head on the shoulder and interact with an internal thread in the associated flange opening.

Further important features and advantages of the invention will emerge from the subclaims, from the drawings and from the associated description of the figures on the basis of the drawings.

It is self-evident that the features mentioned above and the features yet to be discussed below may be used not only in the respectively specified combination but also in other combinations or individually without departing from the scope of the present invention.

Preferred exemplary embodiments of the invention are illustrated in the drawings and will be discussed in more detail in the following description, wherein the same reference designations are used to denote identical or similar or functionally identical components.

In the drawings, in each case schematically:
- Figure 1: shows an isometric view of an electric actuating motor,
- Figure 2: shows a section through the electric actuating motor in the region of a shoulder,
- Figure 3: shows an isometric view of a cover of the electric actuating motor,
- Figure 4: shows an isometric view of a housing pot of the electric actuating motor,
- Figure 5: shows a section through a servo steering device with the electric actuating motor in a closed position,
- Figure 6: shows an enlarged illustration from Figure 5,
- Figure 7: shows the section from Figure 5 in an installed position, and
- Figure 8: shows an enlarged illustration from Figure 7.

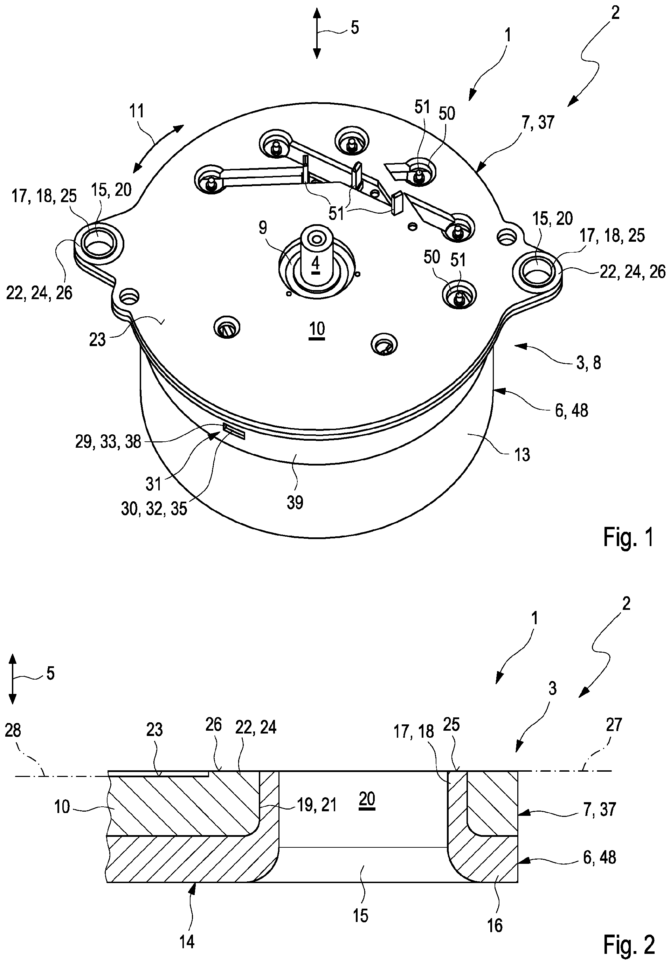

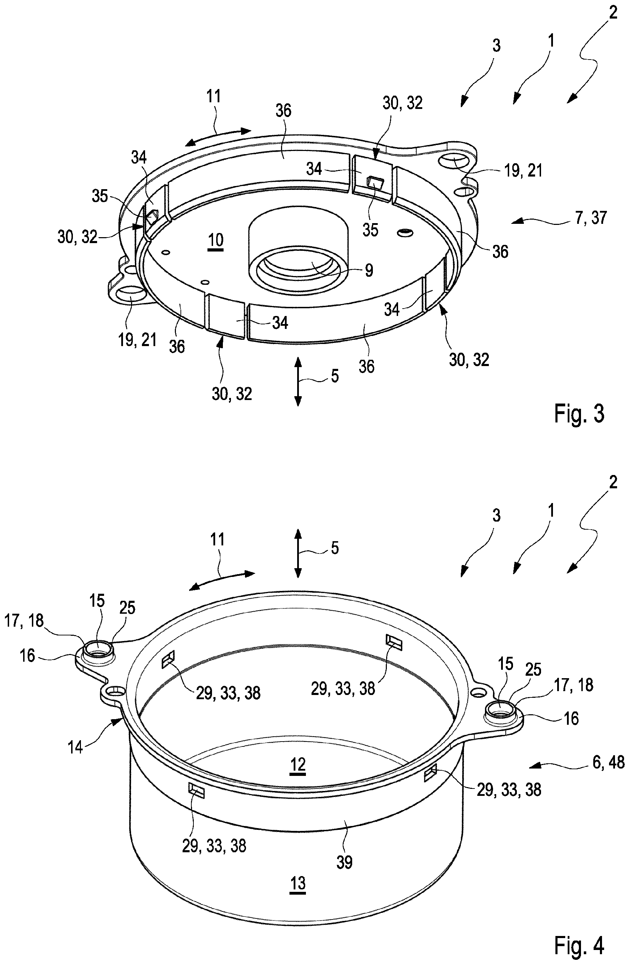

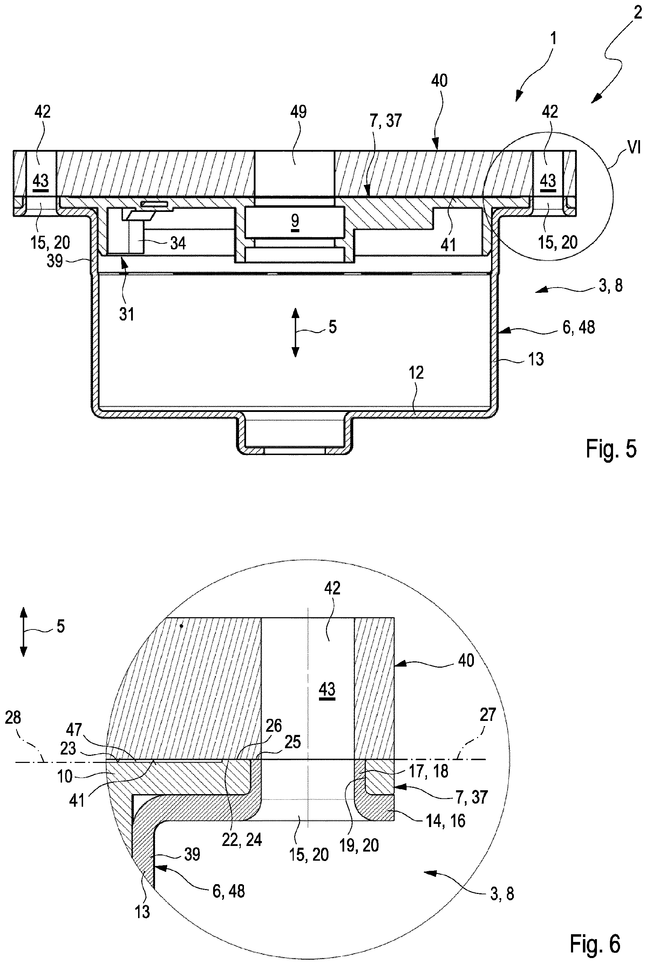

An electric actuating motor 1 as shown by way of example in Figures 1 to 8 is used in a servo steering device 2 as shown by way of example in Figures 5 to 8. The electric actuating motor 1 has a housing 3 in which a stator (not visible in the figures) is accommodated and through which a shaft 4 is guided in an axial direction 5. The housing 3 has a housing pot 6 which is illustrated separately in Figure 4. The housing 3 furthermore has a cover 7 which is separate from the housing pot 6 and which is illustrated separately in Figure 3 and which closes off the housing pot 6 in a closed position 8 shown for example in Figures 1 and 2 and also 5 and 6. Here, the shaft 4 is guided through the cover 7 in an axial direction 5 and is thus guided axially to the outside. For this purpose, the cover 7 has a shaft opening 9 which, in the exemplary embodiment of the electric actuating motor 1 that is shown, is formed in a cover base 10 of the cover 7.

The housing pot 6 has a pot base 12 which runs radially and in a circumferential direction 11 and which is arranged opposite the cover base 10 in the closed position 8. A pot wall 13 of the housing pot 6 protrudes axially from the pot base 12 at the outer side and extends in a surrounding manner in the circumferential direction 11. On that side of the pot wall 13 which is averted from the pot base 12, the housing pot 6 has a shoulder 14 which protrudes radially outwardly and which extends in closed form in the circumferential direction 11. At least one shoulder opening 15 is formed in the shoulder 14. In the exemplary embodiment shown, the housing pot 6 has two shoulder openings 15 which are arranged radially oppositely. The respective shoulder opening 15 may in this case, as shown in the figures, be formed in a tongue 16, which protrudes radially to a greater extent, of the shoulder 14. Furthermore, at least one projection 17 protrudes axially from the shoulder 14 on the side averted from the pot base 12. In the exemplary embodiment shown, the housing pot 6 has two such projections 17. The respective projection 17 is formed, in the example shown, as an axially protruding neck 18 which delimits and thus surrounds an associated one of the shoulder openings 15 in an encircling manner and radially. The respective shoulder opening 15 is thus delimited by an associated collar 18, in particular is formed in the collar 18. Here, Figure 2 shows a section through the electric actuating motor 1 in the region of a shoulder opening 15 of said type.

The cover 7 has, for the respective shoulder opening 15, an associated cover opening 19 which, with the associated shoulder opening 15, forms an axial passage 20 in the closed position 8. The cover 7 furthermore has, for the respective projection 17, an associated projection opening 21 in which the projection 17 is received in the closed position 8. In the exemplary embodiment shown, the respective projection opening 21 corresponds to one of the cover openings 19. This means that the respective projection 17 formed as a neck 18 is received in an associated cover opening 19 as projection opening 21. In the exemplary embodiment shown, the cover 7 has, on the side averted from the pot base 12 in the closed position 8, at least one elevation 22 which protrudes axially from an upper surface 23 which is averted from the pot base 12 in the closed position 8. In the exemplary embodiment shown, the cover 7 has two such elevations 22. Here, the respective elevation 22 is formed as a collar 24 which delimits and surrounds an associated one of the projection openings 21 or cover openings 19. Thus, in the exemplary embodiment shown, the respective collar 24 encloses and surrounds an associated neck 18 in the closed position 8.

As can be seen in particular from Figure 2, the respective elevation 22 is axially at least as tall as the at least one projection 17, in particular as the respective projection 17. In the exemplary embodiment shown in Figure 2, an axially outer end side 25 of the respective projection 17, hereinafter also referred to as projection end side 25, and an axially outer end side 26 of the respective elevation 22, hereinafter also referred to as elevation end side 26, lie in a common, radially running plane 27, hereinafter also referred to as end side plane 27. By contrast to this, in the closed position 8, the upper surface 23 is axially at most as tall as the respective projection end side 25, wherein, in the closed position 8, the upper surface 23 is arranged so as to be offset preferably axially in the direction of the pot base 12 relative to the projection end sides 25. This means in particular that, in the closed position 8, the upper surface 23 of the cover 7 runs in a radial plane 28 which, in relation to the plane 27 of the projection end side 25, is spaced apart axially in the direction of the pot base 12.

For the fastening of the cover 7 to the housing pot 6 and thus for the realization of the closed position 8, the housing pot 6 has at least one connecting means 29, hereinafter also referred to as pot connecting means 29, which forms a detent connection 31 (see for example Figures 1 and 5) with an associated connecting means 30 of the cover 7, hereinafter also referred to as cover connecting means 30. For this purpose, one of the connecting means 29, 30, in the exemplary embodiment shown the cover connecting means 30, is formed as a detent lug 32, and the associated connecting means 29, 30, in the exemplary embodiment shown the pot connecting means 29, is formed as a cutout 33. In the exemplary embodiment shown, in this case, four such detent connections 31 are provided, which are spaced apart from one another in the circumferential direction 11. Accordingly, the cover 7 has four cover connecting means 30 and the housing pot 6 has four pot connecting means 29. The respective detent lug 32 has an axially protruding limb 34 which is radially elastic. Furthermore, the respective detent lug 32 has a lug 35 which protrudes radially, in the exemplary embodiment shown radially outwardly, from the limb 34 and which engages radially into the associated cutout 33 in order to form the associated detent connection 31. In the exemplary embodiment shown, the cover connecting means 30 are arranged so as to be offset radially inwards and protrude axially on that side of the cover base 10 which faces towards the pot base 12 in the closed position 8, such that said cover connecting means extend into the housing pot 6. Between the cover connecting means 30 that are adjacent in the circumferential direction 11, there are arranged wall portions 36 which run in the circumferential direction 11 and which protrude axially from the cover base 10. The cover connecting means 30 are formed integrally on the cover 7, in particular are produced jointly with the cover base 10, for example from plastic. The cover 7 is thus in particular a plastics component 37.

The pot connecting means 29 are formed, in particular moulded, in each case integrally in the pot wall 13. In the exemplary embodiment shown, in which the pot connecting means 29 are in each case a cutout 33, this is thus in particular in each case a cutout 33 in the pot wall 13. The respective recess 33 is preferably formed as a radial aperture 38 which, purely by way of example, is cuboidal in the exemplary embodiment shown. Here, the pot connecting means 29 are formed in a radially outwardly protruding bulge 39 of the pot wall 13 which is arranged between the pot base 12 and the shoulder 14, wherein, in the exemplary embodiment shown, the bulge 39 is spaced apart from the pot base 12, and wherein, in the exemplary embodiment shown, the shoulder 14 axially adjoins the bulge 39.

For the installation of the electric actuating motor 1 in the servo steering device 2, the electric actuating motor 1 is, as shown in Figures 5 to 8, attached to a flange 40 of the servo steering device 2.

For this purpose, the electric actuating motor 1 is attached, in the closed position 8 shown in Figures 5 and 6, to the flange 40. Here, Figure 5 illustrates only the housing 3 of the electric actuating motor 1. Here, Figure 6 shows an enlarged view of the region denoted "VI" in Figure 5. Here, the flange 40 bears against that side of the electric actuating motor 1 which is axially averted from the pot base 12. The flange 40 has a flat outer side 41 on the side facing towards the cover 7. Thus, in the closed position 8, a gap 47 is formed axially between the outer side 41 and the upper surface 23 owing to the at least one elevation 22. The flange 40 furthermore has, for the respective passage 20, an associated flange opening 42 which, with the associated passage 20, forms an axial screw passage 43. In the closed position 8, and when the outer side 41 of the flange 40 is in an abutting position, the outer side 41 and the end sides 25, 26 of the projection 17 and of the elevation 22, 24 lie in the end side plane 27.

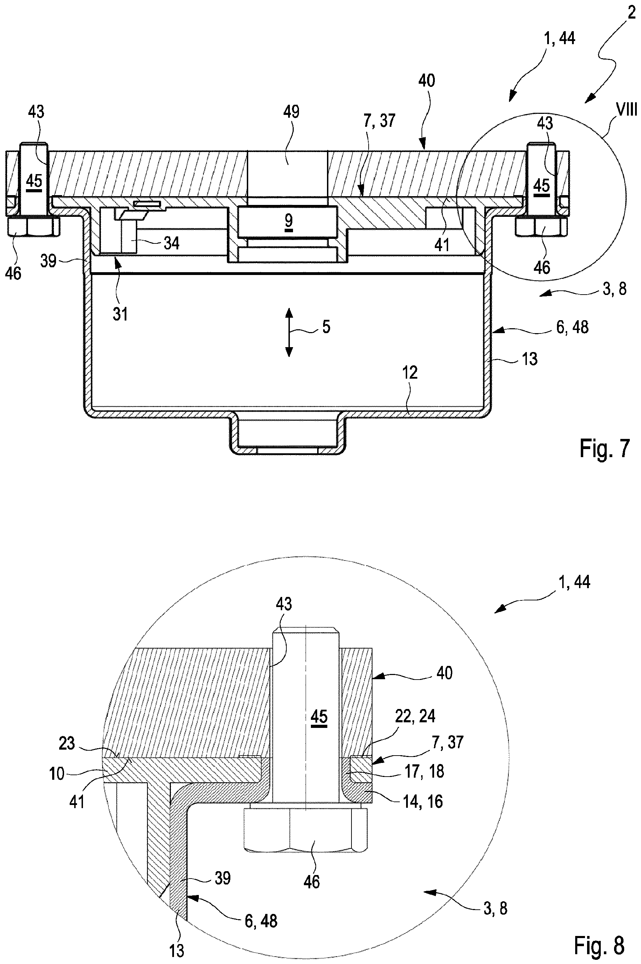

Figures 7 and 8 show an installed position 44 in which the electric actuating motor 1 has been fastened to the flange 40. Here, only the housing 3 of the electric actuating motor 1 is illustrated in Figure 7. Figure 8 shows an enlarged view of the region denoted by VIII in Figure 7. In the installed position 44, an associated screw 45 has been screwed through the respective screw passage 43 such that the flange 40 is acted on axially in the direction of the cover 7 and thus acts on the cover 7 axially in the direction of the housing pot 6. In the installed position 44, the cover 7 is thus preloaded axially between the flange 40 and the housing pot 6, in particular the shoulder 14, and furthermore closes off the housing pot 6. In the exemplary embodiment shown, the respective screw 45 has a screw head 46 which lies on that side of the shoulder 14 which is averted from the flange 40. The screw 45 furthermore has an external thread (not shown) which interacts for example with an internal thread (not shown) in the associated flange opening 42.

It can also be seen that, in the installed position 44, the outer side 41 of the flange 40 lies on the upper surface 23 of the cover 7, and the elevation 22 has been deformed. Thus, the gap 47 that is formed axially between the outer side 41 and the upper surface 23 in the closed position 8 is no longer present, or is at least axially reduced in size, in the installed position 44.

The housing pot 6 may be produced from a metal or a metal alloy, such that the housing pot 6 is a metal component 48.

As can be seen from Figures 5 and 7, the flange 40 furthermore has an opening 49 for the shaft 4, which is hereinafter also referred to as flange shaft opening 49 and through which the shaft 4 is guided axially outwards.

As can be seen in particular from Figure 1, the cover 7 may have further openings 50, hereinafter also referred to as additional openings 50, through which further constituent parts of the electric actuating motor 1, such as for example electrical contacts 51, can be guided and made accessible.

## Claims

1. Electric actuating motor (1) for a servo steering device (2),
- having a housing (3) in which a stator is accommodated and through which a shaft (4) is guided axially,
- wherein the housing (3) has a housing pot (6) and a cover (7) which is separate from the housing pot (6) and which closes off the housing pot (6) in a closed position (8),
- wherein the housing pot (6) has a pot base (12) running radially and in a circumferential direction (11) and has a pot wall (13) protruding axially from the pot base (12) and running in the circumferential direction (11),
- wherein the housing pot (6) has, on that side of the pot wall (13) which is averted from the pot base (12), a radially outwardly protruding shoulder (14) running in the circumferential direction (11),
- wherein the shoulder (14) has at least one shoulder opening (15),
- wherein the cover (7) has a cover base (10) which is situated opposite the pot base (12) in the closed position (8),
- wherein the cover (7) has, for the at least one shoulder opening (15), in each case one associated cover opening (19) which, with the associated shoulder opening (15), forms an axial passage (20) in the closed position (8),
**characterized**
- **in that** the shoulder (14) has at least one projection (17) which protrudes axially on the side averted from the pot base (12),
- **in that** the cover (7) has, for at least one of the at least one projections (17), an associated projection opening (21) in which the projection (17) is received in the closed position (8),
- **in that** the housing pot (6) has at least one pot connecting means (29) in the pot wall (13), and the cover (7) has, for the respective pot connecting means (29), an associated cover connecting means (30) which protrudes axially from the cover base (10) and which is arranged in the housing pot (6) in the closed position (8),
- **in that** the respective pot connecting means (29) forms a detent connection (31) with the associated cover connecting means (30) in the closed position (8).

2. Electric actuating motor according to Claim 1,
**characterized in that** at least one of the connecting means (29, 30) is a detent lug (32) with an axially running and radially elastic limb (34) and with a lug (35) protruding radially from the limb (34), and the associated connecting means (29, 30) is a cutout (33) which is associated with the lug (35) and in which the lug (35) engages radially so as to form the detent connection (31).

3. Electric actuating motor according to Claim 2,
**characterized**
**in that** at least one of the at least one pot connecting means (29) is a cutout (33) of said type, wherein the cutout (33) is formed as a radial aperture (38) in the pot wall (13).

4. Electric actuating motor according to any of Claims 1 to 3,
**characterized**
**in that** at least one of the at least one projections (17) is formed as a neck (18) which surrounds, in particular delimits, an associated one of the at least one shoulder openings (15).

5. Electric actuating motor according to Claim 4,
**characterized**
**in that** at least one of the at least one necks (18) radially and peripherally delimits the associated shoulder opening (15).

6. Electric actuating motor according to any of Claims 1 to 5,
**characterized**
**in that** at least one of the at least one projection openings (21) corresponds to a cover opening (19) which, with the associated shoulder opening (15), forms the passage (20).

7. Electric actuating motor according to any of Claims 1 to 6,
**characterized**
**in that** an elevation (22) protrudes axially from an upper surface (23) of the cover (7), which upper surface (23) is averted from the pot base (10) in the closed position (8).

8. Electric actuating motor according to Claim 7,
**characterized**
**in that** at least one of the at least one elevations (22) is formed as a collar (24) which surrounds, in particular delimits, an associated one of the at least one projection openings (21).

9. Electric actuating motor according to any of Claims 1 to 8,
**characterized**
**in that** the shoulder (14) has at least two projections (17) which are spaced apart from one another in the circumferential direction (11).

10. Electric actuating motor according to any of Claims 1 to 9,
**characterized**
**in that** the housing pot (6) has at least two pot connecting means (29) which are spaced apart from one another in the circumferential direction (11).

11. Electric actuating motor according to any of Claims 1 to 10,
**characterized**
**in that** the housing pot (6) is a metal component (48) and the cover (7) is a plastics component (37).

12. Servo steering device (2) for a motor vehicle, having an electric actuating motor (1) according to any of Claims 1 to 11 and having a steering gear which is connected in terms of drive to the shaft (4) of the electric actuating motor (1),
- wherein the electric actuating motor (1) is fastened by means of a flange (40) in the servo steering device (2),
- wherein the flange (40), in an installed position (44), is fastened by means of a screw (45), which is guided through the at least one of the at least one passages (20), to the electric actuating motor (1) in such a way that the flange (40) acts on the cover (7) axially in the direction of the housing pot (6).

13. Servo steering device according to Claim 12,
**characterized**
- **in that** the electric actuating motor (1) is designed according to any of Claims 7 to 11,
- **in that** at least one of the at least one elevations (22), in the installed position (44), is deformed as a result of the action of the flange (40).

14. Method for producing a servo steering device (2) according to Claim 12 or 13, having the method steps:
- providing the electric actuating motor (1),
• wherein the cover (7) is attached to the housing pot (6), and placed into the closed position (8), without screws,
- producing the servo steering device (2),
• wherein the electric actuating motor (1) is attached with the cover (7) to the flange (40) such that at least one of the at least one passages (20), with an associated flange opening (42) of the flange (40), forms an axial screw passage (43),
• wherein a screw (45) is inserted into the respective screw passage (43) and screwed tight such that the flange (40) acts on the cover (7) axially in the direction of the housing pot (6).
